# EUROPEAN PATENT SPECIFICATION

(11) **EP 3 553 404 B1**
(45) Date of publication and mention of the grant of the patent: **13.01.2021**
(21) Application number: 17881392.9
(22) Date of filing: 06.12.2017
(51) Int. Cl.: F24F 11/87, F24F 11/46, F24F 11/62, F24F 11/85, F24F 1/022

(54) **AIR CONDITIONING SYSTEM**
KLIMATISIERUNGSSYSTEM
SYSTÈME DE CLIMATISATION

(30) Priority: 12.12.2016 JP 2016240659
(43) Date of publication of application: 16.10.2019
(73) Proprietor: Daikin Industries, Ltd., Osaka-shi, Osaka 530-8323 (JP)
(72) Inventor: MATSUBARA, Atsushi, Osaka-shi, Osaka 530-8323 (JP); TASAKA, Akio, Osaka-shi, Osaka 530-8323 (JP); SHIONO, Yuusuke, Osaka-shi, Osaka 530-8323 (JP); IKEDA, Makoto, Osaka-shi, Osaka 530-8323 (JP); NABESHIMA, Norihiro, Osaka-shi, Osaka 530-8323 (JP)
(74) Representative: Global IP Europe Patentanwaltskanzlei
(86) International application number: PCT/JP2017/043804
(87) International publication number: WO 2018/110385

(56) References cited:
- EP-A1- 3 081 868
- WO-A1-2014/036612
- JP-A- 2011 017 526
- JP-A- 2013 221 623
- JP-B1- S 482 756
- JP-B1- S 482 756
- US-A- 2 817 217
- US-A- 3 267 995
- US-A- 5 259 553
- US-A- 5 890 322
- US-A1- 2010 275 628
- US-A1- 2015 338 111
- US-A1- 2016 348 934

## Description

### TECHNICAL FIELD

The present invention relates to an air conditioning system. More particularly, the present invention relates to an air conditioning system for implementing air conditioning in an air-conditioning target space of an indoor area by carrying out heat exchange with air in a common space that is disposed on a periphery of the air-conditioning target space in the indoor area and is not subjected to air conditioning.

### BACKGROUND ART

An air conditioning system that has been proposed in the related art includes a plurality of compact unitary air conditioners each implementing air conditioning utilizing a common space such as a roof space that is not subjected to air conditioning in an indoor area. For example, Patent Literature 1 (JP S48-2756 A) discloses a unitary air conditioner including a temperature-regulating heat exchanger and a heat-radiating heat exchanger for a refrigeration cycle. The temperature-regulating heat exchanger and the heat-radiating heat exchanger are disposed at particularly a boundary between a room and a roof space in an indoor area. In addition, air in a common space is used for heat exchange by a plurality of heat-radiating heat exchangers of a plurality of unitary air conditioners.

### SUMMARY OF THE INVENTION

### <Technical Problem>

In the air conditioning system disclosed in Patent Literature 1, for example, the common space such as the roof space in the indoor area serves as a heat-insulating air flow path, and an exhaust fan ventilates the roof space. However, it is sometimes difficult only by the ventilation of the roof space with the exhaust fan disclosed in Patent Literature 1 to achieve an efficient air conditioning operation, depending on the structure of a building, the number of unitary air conditioners, and the arrangement of the unitary air conditioners.

The present invention provides an air conditioning system capable of reducing energy consumption by efficient shared use of air in a common space that is not subjected to air conditioning in an indoor area, among a plurality of air conditioners for the purpose of heat exchange.

### <Solutions to Problem>

The technical problem is solved with an air conditioning system as claimed in claim 1. A first aspect of the present invention provides an air conditioning system for implementing air conditioning in an air-conditioning target space of an indoor area by carrying out heat exchange with air in a common space that is disposed on a periphery of the air-conditioning target space in the indoor area and is not subjected to air conditioning. The air conditioning system includes a plurality of air conditioners. Each of the air conditioners includes: an air-conditioning target space-side heat exchanger configured to carry out heat exchange with air in the air-conditioning target space; a common space-side heat exchanger configured to carry out heat transfer to and from the air-conditioning target space-side heat exchanger; and a common space-side fan configured to feed taken in air from the common space to the common space-side heat exchanger and to blow the air into the common space. The common space-side heat exchangers are disposed in the common space. The air-conditioning target space-side heat exchangers implement air conditioning in the air-conditioning target space. The air conditioning system is configured to control the air conditioners, based on temperature information items at plural positions in the common space.

The air conditioning system according to the first aspect controls the air conditioners, based on the temperature information items at the plural positions in the common space. This configuration thus enables control of more efficient operations of the air conditioners at the respective positions in accordance with the temperature information items at the respective positions.

A second aspect of the present invention provides the air conditioning system according to the first aspect, the air conditioning system being configured to control capacities of the air conditioners, based on the temperature information items at the plural positions in the common space.

The air conditioning system according to the second aspect controls the capacities of the air conditioners, based on the temperature information items at the plural positions in the common space. This configuration thus causes the air conditioners to exert the capacities appropriate to the temperatures at the respective positions.

A third aspect of the present invention provides the air conditioning system according to the first or second aspect, the air conditioning system being configured to determine distribution of air conditioning capacities of the air conditioners, based on the temperature information items at the plural positions in the common space.

The air conditioning system according to the third aspect determines the distribution of the air conditioning capacities of the air conditioners, based on the temperature information items at the plural positions in the common space. The air conditioning system thus divides the air conditioners into air conditioners with good heat exchange efficiency and air conditioners with poor heat exchange efficiency, based on the temperature information items in the common space. The air conditioning system then appropriately increases a ratio of the air conditioning capacities of the air conditioners with good heat exchange efficiency in the entire system. The air conditioning system also appropriately decreases a ratio of the air conditioning capacities of the air conditioners with poor heat exchange efficiency in the entire system.

A fourth aspect of the present invention provides the air conditioning system according to any of the first to third aspects, the air conditioning system being configured to control the air conditioners, based on requests to the respective air conditioners for temperature control in the air-conditioning target space, and the temperature information items at the plural positions in the common space.

The air conditioning system according to the fourth aspect controls the air conditioners, based on not only the temperature information items at the plural positions, but also the requests for temperature control in the air-conditioning target space. This configuration therefore improves the heat exchange efficiency of the entire system while reducing inappropriate decrease in air conditioning capacity of each air conditioner in the air-conditioning target space.

A fifth aspect of the present invention provides the air conditioning system according to any of the first to fourth aspects, wherein the temperature information items at the plural positions in the common space indicate temperature distribution in the common space.

The air conditioning system according to the fifth aspect controls the air conditioners, based on the temperature distribution in the common space. This configuration enables control appropriate to the temperature distribution in the common space so as to efficiently operate the air conditioners.

A sixth aspect of the present invention provides the air conditioning system according to any of the first to fifth aspects, wherein the temperature information items at the plural positions in the common space are real-time temperature information items to be obtained by measuring temperatures at the plural positions in the common space in real time.

The air conditioning system according to the sixth aspect controls the air conditioners, based on the real-time temperature information items obtained by measuring the temperatures at the plural positions in the common space in real time. This configuration thus reduces energy loss to be caused when the operations of the air conditioners deviate from an optimum operating state because of a difference between an actual temperature and a temperature based on each temperature information item.

### <Advantageous Effects of Invention>

The air conditioning system according to the first aspect of the present invention reduces its entire energy consumption.

The air conditioning system according to the second aspect of the present invention increases its entire heat exchange efficiency by increasing a burden on an air conditioner with good heat exchange efficiency.

The air conditioning system according to the third aspect of the present invention increases its entire heat exchange efficiency by appropriate capacity distribution.

The air conditioning system according to the fourth aspect of the present invention reduces decrease in capacity to adjust an air temperature of the air-conditioning target space.

The air conditioning system according to the fifth aspect of the present invention improves reduction of energy consumption in such a manner that the air conditioning system operates in accordance with the temperature distribution in the common space.

The air conditioning system according to the sixth aspect of the present invention reduces its entire energy consumption by reducing energy loss due to a temporal change in air temperature of the common space.

### BRIEF DESCRIPTION OF THE DRAWINGS

FIG. 1 is a schematic sectional view of a building in which an air conditioning system according to an embodiment is installed.
FIG. 2 is a schematic plan view of the building in which the air conditioning system according to the embodiment is installed.
FIG. 3 is a block diagram of an exemplary configuration of the air conditioning system according to the embodiment.
FIG. 4 is a schematic sectional view of a unitary air conditioner constituting the air conditioning system.
FIG. 5 is a circuit diagram of an exemplary refrigerant circuit in the air conditioner illustrated in FIG. 4.
FIG. 6 is a flowchart of exemplary operation of the air conditioning system according to the embodiment.
FIG. 7 is a schematic plan view of a building in which an air conditioning system according to Modification 1B is installed.
FIG. 8 is a schematic sectional view of a building in which an air conditioning system according to Modification 1E is installed.
FIG. 9 is a perspective view of an exemplary first casing in an air conditioner according to Modification 1F.
FIG. 10 is a schematic sectional view of the air conditioner illustrated in FIG. 9.

### DESCRIPTION OF EMBODIMENTS

### (1) General Configuration

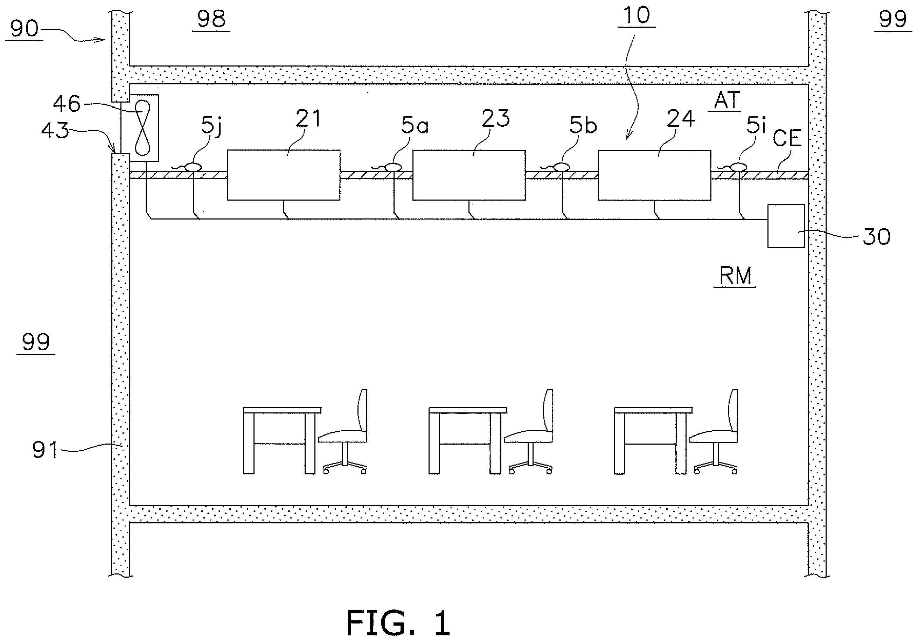

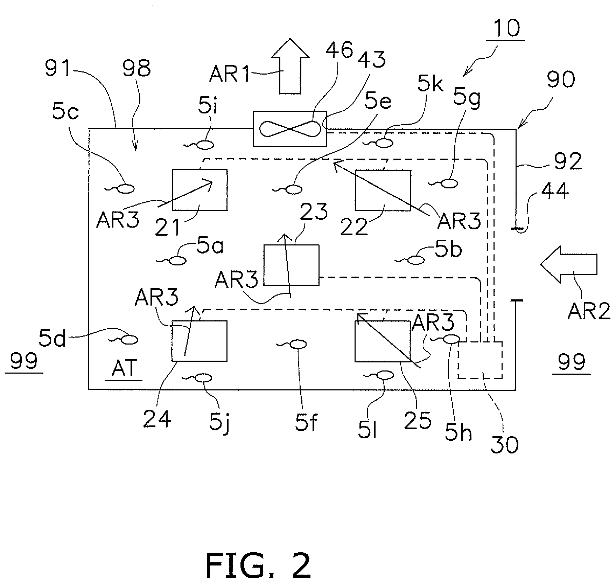

With reference to FIGS. 1 and 2, a description will be given of an air conditioning system according to an embodiment of the present invention. An air conditioning system 10 illustrated in FIGS. 1 and 2 is configured to implement air conditioning in a room RM as an air-conditioning target space of an indoor area 98 by carrying out heat exchange with air in an attic AT as a common space that is disposed on a periphery of the room RM in the indoor area 98 and is not subjected to air conditioning. This embodiment describes a case where the air conditioning system 10 implements air conditioning in one room RM; however, the present invention is applicable to a case where the air conditioning system 10 implements air conditioning in a plurality of rooms. The air conditioning system 10 to be described in this embodiment controls a path over which air flows in one continuous common space. Alternatively, the present invention is applicable to one air conditioning system configured to control paths over which air flows in a plurality of independent common spaces such as the attic of a first floor and the attic of a second floor in a building.

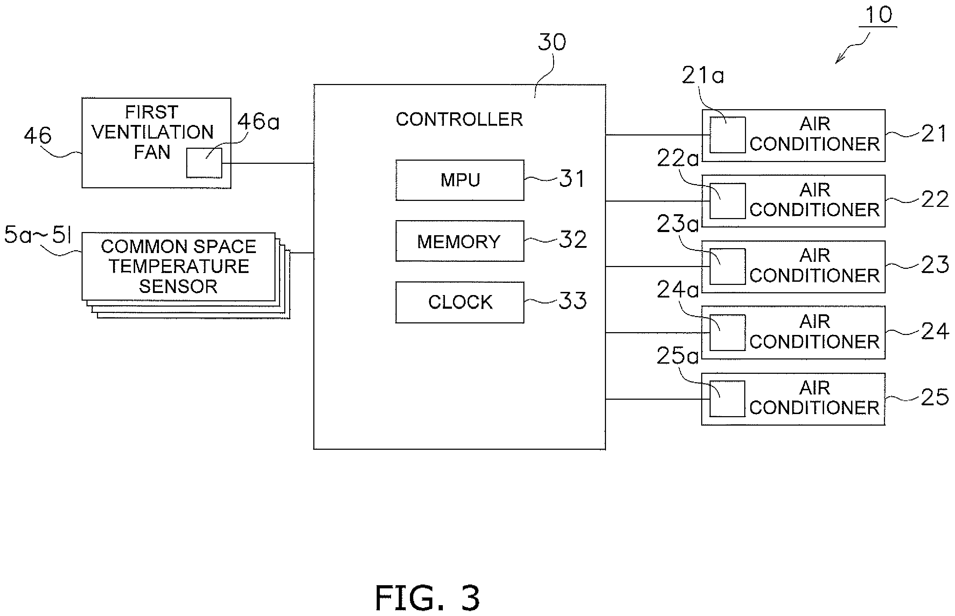

The air conditioning system 10 illustrated in FIG. 1 includes a plurality of unitary air conditioners 21, 22, 23, 24, and 25, a controller 30, a first ventilation fan 46, and 12 common space temperature sensors 5a to 51. FIG. 3 schematically illustrates the relationship between the controller 30 and the other constituent elements of the air conditioning system 10. The controller 30 controls all the five unitary air conditioners 21 to 25. The controller 30 also controls the first ventilation fan 46. The controller 30 controls the plurality of air conditioners 21 to 25, based on temperature information items at positions where the common space temperature sensors 5a to 5l are placed in the common space.

### (2) Specific Configuration

### (2-1) Unitary Air Conditioners 21 to 25

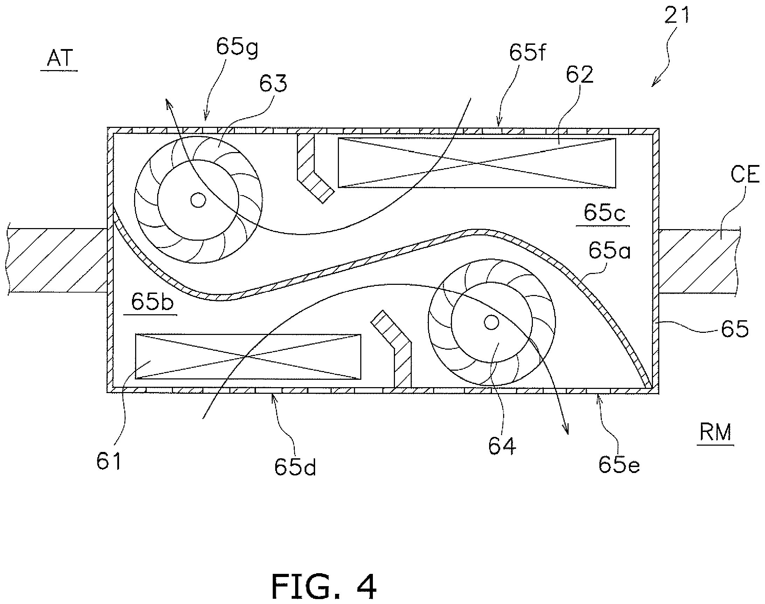

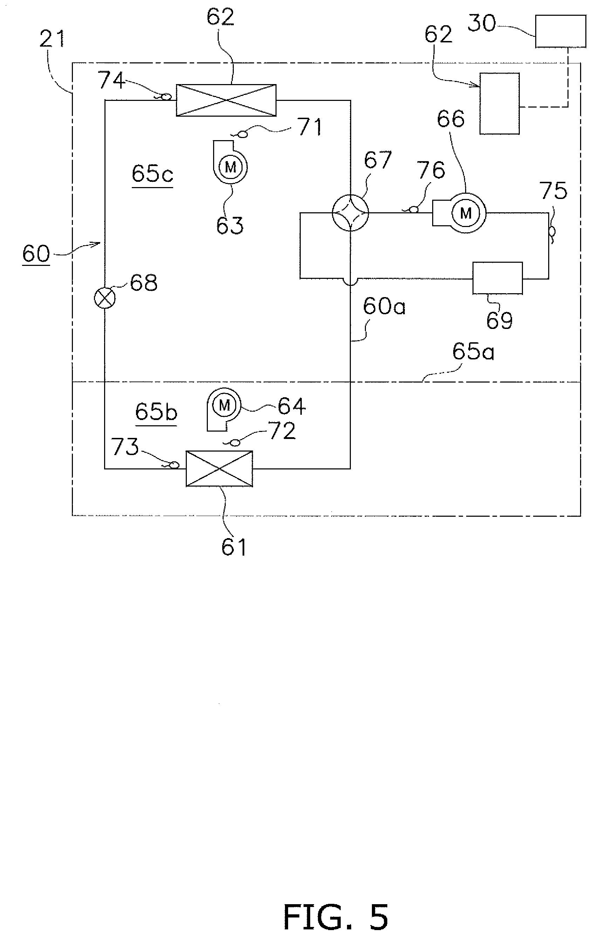

The unitary air conditioners 21 to 25 may be different in structure from one another. It is however assumed in the following description that the unitary air conditioners 21 to 25 are equal in structure to one another. With reference to FIGS. 4 and 5, therefore, a description will be given of the air conditioner 21 among the unitary air conditioners 21 to 25. The air conditioner 21 includes: an air-conditioning target space-side heat exchanger 61 configured to carry out heat exchange with air in the room RM as the air-conditioning target space; a common space-side heat exchanger 62 configured to carry out heat transfer to and from the air-conditioning target space-side heat exchanger 61; a common space-side fan 63 configured to feed taken in air from the attic AT to the common space-side heat exchanger 62 and to blow the air into the attic AT; an air-conditioning target space-side fan 64 configured to feed taken in air from the room RM to the air-conditioning target space-side heat exchanger 61 and to blow the air into the room RM; and a casing 65. As in the air conditioner 21, each of the remaining unitary air conditioners 22 to 25 includes an air-conditioning target space-side heat exchanger 61, a common space-side heat exchanger 62, a common space-side fan 63, an air-conditioning target space-side fan 64, and a casing 65 in which the components 61 to 64 are housed. The common space-side heat exchangers 62 of the air conditioners 21 to 25 thus share the air in the attic AT as the common space.

Each of the air-conditioning target space-side heat exchanger 61 and the common space-side heat exchanger 62 may be a fin-and-tube heat exchanger that includes a large number of fins (not illustrated) and a plurality of heat transfer tubes (not illustrated) respectively penetrating through the fins and is configured to carry out heat exchange between air passing through each fin and a refrigerant flowing through the corresponding heat transfer tube. Heat transfer between the air-conditioning target space-side heat exchanger 61 and the common space-side heat exchanger 62 is effected by a refrigerant flowing through a refrigerant circuit 60 illustrated in FIG. 5.

Each of the common space-side fan 63 and the air-conditioning target space-side fan 64 may be, for example, a centrifugal fan, an axial fan, or a cross-flow fan. Each of the common space-side fan 63 and the air-conditioning target space-side fan 64 illustrated in FIG. 4 is a cross-flow fan. As to the common space-side fan 63 and the air-conditioning target space-side fan 64, the numbers of rotations are changeable independently of each other. As to the air conditioners 21 to 25, accordingly, the controller 30 controls a common space-side airflow volume of the common space-side fan 63 and an air-conditioning target space-side airflow volume of the air-conditioning target space-side fan 64 independently of and separately from each other in the common space and the air-conditioning target space. The controller 30 also controls the air conditioners 21 to 25 independently of one another.

The casing 65 of the air conditioner 21 includes a partition plate 65a dividing a space inside the casing 65 into an air-conditioning target space-side section 65b and a common space-side section 65c. The casing 65 has, in its one side exposed to the room RM, a room-side intake port 65d through which air in the room RM is taken in, and a room-side blow-out port 65e through which air is blown into the room RM. The casing 65 also has, in its another side exposed to the attic AT, a common space-side intake port 65f through which air in the attic AT is taken in, and a common space-side blow-out port 65g through which air is blown into the attic AT.

FIG. 5 illustrates an example of the refrigerant circuit 60. The refrigerant circuit 60 includes a compressor 66, a four-way switching valve 67, the common space-side heat exchanger 62, an expansion mechanism 68, the air-conditioning target space-side heat exchanger 61, and an accumulator 69 that are interconnected via a refrigerant pipe 60a. During a cooling operation, the four-way switching valve 67 establishes a connection indicated by a solid line, so that the refrigerant discharged from the compressor 66 flows toward the common space-side heat exchanger 62 via the four-way switching valve 67. The common space-side heat exchanger 62 cools the refrigerant by heat exchange with air in the attic AT. The expansion mechanism 68 then expands the refrigerant. The resultant refrigerant flows toward the air-conditioning target space-side heat exchanger 61. The air-conditioning target space-side heat exchanger 61 warms the refrigerant by heat exchange with air in the room RM. The resultant refrigerant is then sucked into the compressor 66 via the four-way switching valve 67 and the accumulator 69. During a heating operation, the four-way switching valve 67 establishes a connection indicated by a broken line, so that the refrigerant discharged from the compressor 66 flows into the air-conditioning target space-side heat exchanger 61 via the four-way switching valve 67. The air-conditioning target space-side heat exchanger 61 cools the refrigerant by heat exchange with air in the room RM. The expansion mechanism 68 then expands the refrigerant. The resultant refrigerant flows into the common space-side heat exchanger 62. The common space-side heat exchanger 62 warms the refrigerant by heat exchange with air in the attic AT. The resultant refrigerant is then sucked into the compressor 66 via the four-way switching valve 67 and the accumulator 69.

The air conditioner 21 includes temperature sensors 71 to 76 for the purpose of control. The temperature sensor 71 is configured to detect a temperature of air in the attic AT, the air being not subjected to heat exchange yet by the common space-side heat exchanger 62. The temperature sensor 72 is configured to detect a temperature of air in the room RM, the air being not subjected to heat exchange yet by the air-conditioning target space-side heat exchanger 61. The temperature sensor 73 is disposed between the expansion mechanism 68 and the air-conditioning target space-side heat exchanger 61, and is configured to detect a temperature of the refrigerant at a port of the air-conditioning target space-side heat exchanger 61. The temperature sensor 74 is disposed between the expansion mechanism 68 and the common space-side heat exchanger 62, and is configured to detect a temperature of the refrigerant at a port of the common space-side heat exchanger 62. The temperature sensor 75 is disposed between the accumulator 69 and the compressor 66, and is configured to detect a temperature of the refrigerant to be sucked into the compressor 66. The temperature sensor 76 is disposed between the compressor 66 and the four-way switching valve 67, and is configured to detect a temperature of the refrigerant discharged from the compressor 66. The air conditioner 21 is controlled by using of the temperature sensors 71 to 76 such that the degree of superheating of the refrigerant to be sucked into the compressor 66 falls within a predetermined range, for example. The air conditioner 21 is also controlled such that the temperature of the refrigerant discharged from the compressor 66 takes a value equal to or less than a predetermined value. In the air conditioner 21, the refrigerant circuit 60 implements a refrigeration cycle, particularly a vapor compression refrigeration cycle.

The compressor 66 has a capacity that is changeable by a change in number of rotations (operating frequency). Each of the air conditioners 21 to 25 can adapt to a processing load to be set by adjustments of, for example, the number of rotations of the compressor 66, the number of rotations of the common space-side fan 63, and the number of rotations of the air-conditioning target space-side fan 64. The processing load increases or decreases owing to, for example, a difference between a set temperature of the room RM and a temperature of air to be sucked into each of the air conditioners 21 to 25 from the room RM. In the cooling operation, for example, the processing load in a case where the set temperature is 28°C and the temperature of the air to be sucked is 32°C is larger than the processing load in a case where the set temperature is 28°C and the temperature of the air to be sucked is 30°C. Also in the cooling operation, for example, the processing load in a case where the set temperature is 26°C and the temperature of the air to be sucked is 30°C is larger than the processing load in a case where the set temperature is 28°C and the temperature of the air to be sucked is 30°C. In the heating operation, for example, the processing load in a case where the set temperature is 24°C and the temperature of the air to be sucked is 18°C is larger than the processing load in a case where the set temperature is 24°C and the temperature of the air to be sucked is 20°C. In addition, the processing load in a case where the set temperature is 24°C and the temperature of the air to be sucked is 20°C is larger than the processing load in a case where the set temperature is 22°C and the temperature of the air to be sucked is 20°C.

### (2-2) Exhaust Port 43 and Intake Port 44

A building 90 has an exhaust port 43 in its north wall 91. The building 90 also has an intake port 44 in its east wall 92. Each of the north wall 91 and the east wall 92 serves as a boundary between the indoor area 98 of the building 90 and an outdoor area 99. The exhaust port 43 and the intake port 44 allow airflow between the outdoor area 99 and the attic AT. In this embodiment, the exhaust port 43 is formed in the north wall 91, and the intake port 44 is formed in the east wall 92; however, the exhaust port 43 and the intake port 44 are not necessarily formed in the north and the east, respectively. For example, the exhaust port 43 and the intake port 44 may be formed in the north and the south, respectively. Alternatively, the exhaust port 43 and the intake port 44 may be formed in the southeast and the southwest, respectively. Still alternatively, the exhaust port 43 may be formed in the east-end side of the north wall, and the intake port 44 may be formed in the west-end side of the same north wall.

### (2-3) First Ventilation Fan 46

The first ventilation fan 46 may be, for example, a centrifugal fan, an axial fan, or a cross-flow fan. The first ventilation fan 46 illustrated in FIG. 2 is an axial fan. The first ventilation fan 46 is an exhaust fan mounted to the exhaust port 43. In other words, the first ventilation fan 46 is disposed near the exhaust port 43. A position where a ventilation fan is mounted is not limited as long as the ventilation fan is disposed near a ventilation port. Therefore, the first ventilation fan 46 is not necessarily mounted to the exhaust port 43. For example, the first ventilation fan 46 may be mounted at a remote location where an air current is produced at a ventilation port.

When the first ventilation fan 46 is driven, an air current directed from the attic AT to the outdoor area 99 through the exhaust port 43 is produced as indicated by an arrow AR1 in FIG. 2. The air current indicated by the arrow AR1 forms a negative pressure in the attic AT to produce an air current directed from the outdoor area 99 to the attic AT through the intake port 44 (i.e., an air current indicated by an arrow AR2). Consequently, an air current directed from the intake port 44 to the exhaust port 43 (i.e., an air current indicated by an arrow AR3) is produced in the attic AT.

### (2-4) Controller 30

As illustrated in FIG. 3, the controller 30 includes a micro processing unit (MPU) 31, a memory 32, and a clock 33. The controller 30 is connected to control units 21a, 22a, 23a, 24a, and 25a of the air conditioners 21, 22, 23, 24, and 25. The controller 30 is also connected to a control unit 46a of the first ventilation fan 46. The controller 30 is also connected to the common space temperature sensors 5a to 5l to receive temperatures detected by the respective common space temperature sensors 5a to 51. The controller 30 also receives information items on operating states of the air conditioners 21 to 25, from the control units 21a to 25a. The controller 30 thus determines whether each of the air conditioners 21 to 25 is operated. The controller 30 also receives data for calculating a processing load, from the control units 21a to 25a.

For example, the memory 32 of the controller 30 stores therein a program for controlling the operation (to be described later) of the air conditioning system 10 according to this embodiment. The MPU 31 sends commands to the control units 21a to 25a, and 46a in accordance with the program stored in the memory 32. In this embodiment, the controller 30 is disposed inside the building 90; however, the controller 30 may be disposed outside the building 90. For example, the memory function of the controller 30 and the processing function of the controller 30 may be provided at different places, respectively.

### (2-5) Common Space Temperature Sensors 5a to 5l

Each of the common space temperature sensors 5a to 5l may be, for example, a thermistor. Each of the 12 common space temperature sensors 5a to 5l is mounted to a place that is less susceptible to an influence of air to be blown from the first ventilation fan 46 and an influence of air to be blown from each of the air conditioners 21 to 25. Examples of the place where such a common space temperature sensor is mounted may include a place which is close to a ceiling CE and is not directly exposed to air to be blown from the common space-side blow-out port 65g (see FIG. 4) of each of the air conditioners 21 to 25, and a high place which is away from the ceiling CE.

### (3) General Operation

### (3-1) Outline

The place where the exhaust port 43 is formed and the place where the intake port 44 is formed are sometimes restricted due to, for example, the structure of the building 90 and the ambient environment of the building 90. In some instances, the air conditioners 21 to 25 are forced to be installed in an existing building 90 originally having such an exhaust port 43 and intake port 44. Consequently, an appropriate path over which air flows cannot be set in the attic AT, and weak airflow or air stagnation may occur at a southwest place on the ground that the exhaust port 43 and the intake port 44 are formed in only the north wall 91 and the east wall 92, respectively, as illustrated in FIG. 2. The occurrence of weak airflow or air stagnation results in partial unsatisfactory ventilation in the attic AT, causing an unfavorable temperature change (a temperature rise in the cooling operation or a temperature drop in the heating operation) at a place where the ventilation is unsatisfactory. For example, the air conditioner 24 having the common space-side heat exchanger 62 that must carry out heat exchange using the air in the place where the ventilation is unsatisfactory tends to become inferior in heat exchange efficiency to the air conditioner 22 located on a line between the exhaust port 43 and the intake port 44. In view of this, the air conditioning system 10 controls the air conditioners 21 to 25, based on temperature information items at plural positions in the attic AT, the temperature information items being obtained by the common space temperature sensors 5a to 51. Specifically, for example, the controller 30 decreases the air conditioning capacity of the air conditioner 24 in the place where the ventilation is unsatisfactory, and increases the air conditioning capacity of the air conditioner 22 in the place where the ventilation is favorable. The air conditioning capacity corresponds to a cooling capacity in the cooling operation and a heating capacity in the heating operation, and refers to a capacity as to how much heat energy can be removed from or given to an air-conditioning target space within a certain period of time. As the air conditioning capacity is larger, greater heat energy can be removed from or given to the air-conditioning target space. Next, a description will be given of capacity control to be performed on the plurality of air conditioners 21 to 25 based on the temperature information items at the plural positions in the attic AT, the temperature information items being obtained by the common space temperature sensors 5a to 51.

In the cooling operation, each of the unitary air conditioners 21 to 25 blows cold air into the room RM. The cold air to be blown into the room RM typically has a temperature lower than an air temperature of the outdoor area 99. At this time, each of the air conditioners 21 to 25 blows hot air into the attic AT. The hot air to be blown into the attic AT typically has a temperature higher than an air temperature of the outdoor area 99. In the heating operation, each of the air conditioners 21 to 25 blows hot air into the room RM. The hot air to be blown into the room RM typically has a temperature higher than an air temperature of the outdoor area 99. At this time, each of the air conditioners 21 to 25 blows cold air into the attic AT. The cold air to be blown into the attic AT typically has a temperature lower than an air temperature of the outdoor area 99.

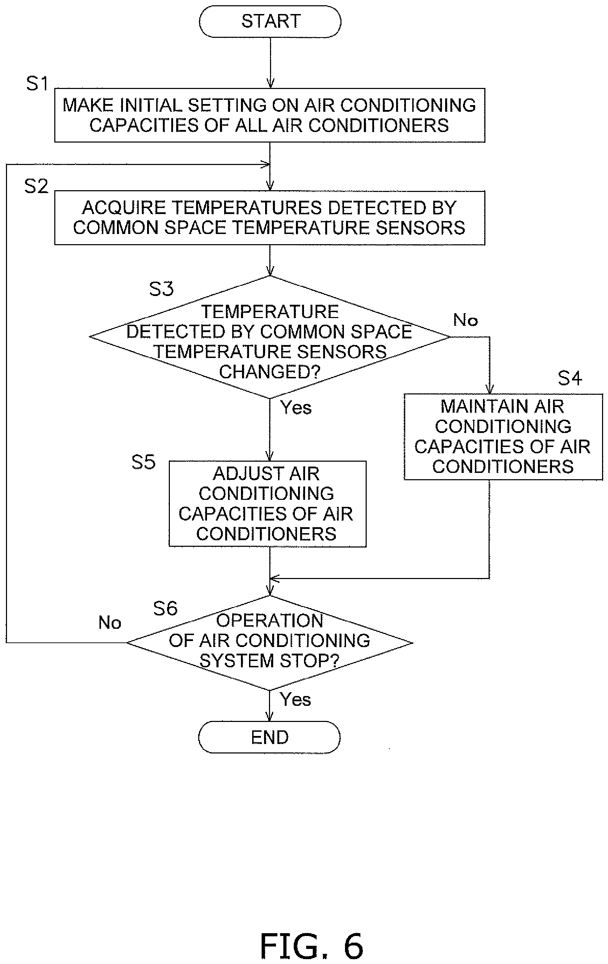

With reference to a flowchart of FIG. 6, next, a description will be given of the operations of the air conditioning system 10 in the case where the plural positions in the attic AT are different in temperature from one another in the cooling operation and heating operation. For ease of the description, it is assumed in FIG. 6 that the air conditioners 21 to 25 are equal in set temperature to one another. The controller 30 makes an initial setting on the air conditioning capacity of each of the air conditioners 21 to 25 (step S1). In making the initial setting, the air conditioners 21 to 25 may be different in air conditioning capacity from one another in consideration of the temperature difference at the plural positions in the attic AT, the temperature difference being caused after the start of the operation. For example, the controller 30 sets the air conditioning capacity of the air conditioner 24 to be lower than the air conditioning capacity of each of the air conditioners 21 to 23, and 25. The controller 30 may lower the air conditioning capacity of the air conditioner 24 by, for example, setting an upper limit value of the number of rotations of the compressor 66 and/or an upper limit value of the number of rotations of the common space-side fan 63 in the air conditioner 24 to be lower than those in the remaining air conditioners 21 to 23, and 25. At the start of the operation, the controller 30 acquires temperatures detected by the common space temperature sensors 5a to 5l at preset intervals (step S2). The controller 30 detects each interval, based on a count by the clock 33, for example. The controller 30 determines a change in air temperature around each air conditioner, based on the acquired temperatures detected at the plural positions (12 positions in this embodiment) (step S3). When there is no change in air temperature of the attic AT until the end of the interval, the controller 30 maintains the air conditioning capacities of the respective air conditioners 21 to 25 (step S4). The processing then proceeds to step S6. When there is a change in air temperature of the attic AT until the end of the interval, the controller 30 adjusts the air conditioning capacities of the respective air conditioners 21 to 25 in accordance with the change in air temperature of the attic AT (step S5). The processing then proceeds to step S6. As to an air conditioner whose ambient temperature rises in the cooling operation and an air conditioner whose ambient temperature drops in the heating operation, the controller 30 decreases the air conditioning capacity. As to an air conditioner whose ambient temperature drops in the cooling operation and an air conditioner whose ambient temperature rises in the heating operation, the controller 30 increases the air conditioning capacity if possible. An air conditioner whose air conditioning capacity has already reached its upper limit value is maintained as it is. An air conditioner which is at rest although the air conditioning capacity should be decreased is maintained at its stop state. In step S6, the controller 30 determines whether to stop the operation of the air conditioning system 10. When the controller 30 makes a determination to continuously operate the air conditioning system 10, the processing returns to step S2. When the controller 30 makes a determination to stop the air conditioning system, then the controller 30 terminates the operation (steps S1 to S6) for adjusting the air conditioning capacities of the respective air conditioners 21 to 25.

### (3-2) Method of Adjusting Air Conditioning Capacity

For example, an air conditioning capacity may be adjusted by determining distribution of air conditioning capacities of a plurality of air conditioners, based on temperature information items at plural positions in a common space. First, the controller 30 determines a total air conditioning capacity as to the air conditioners 21 to 25, from a set temperature and an air temperature of the room RM. Assuming herein that the total air conditioning capacity is "1", the controller 30 adjusts the air conditioning capacities of the respective air conditioners 21 to 25 such that a sum of the air conditioning capacities becomes equal to "1". In this embodiment, the controller 30 increases the air conditioning capacity of the air conditioner 22 in the place where an air current flows fastest, and decreases the air conditioning capacity of the air conditioner 24 in the place where air stagnation tends to make ambient temperature inappropriate. For example, the air conditioning capacities of the air conditioners 21 to 25 are respectively set at "0.2", "0.3", "0.2", "0.1", and "0.2". In a case where there is a considerable temperature difference between the circumference of the air conditioner 24 and the circumference of each of the remaining air conditioners 21 to 23, and 25, the controller 30 may stop the air conditioner 24 and adjust the air conditioning capacities of the remaining air conditioners 21 to 23, and 25 such that a sum of the air conditioning capacities becomes equal to "1".

The controller 30 may obtain temperature distribution in the attic AT from temperatures detected by the common space temperature sensors 5a to 5l in order to employ the temperature distribution as a reference for determining the above-described distribution of the air conditioning capacities. The controller 30 may acquire the temperature distribution in the attic AT, for example, by repetitive experiments or simulations for previously establishing associations among temperature distribution in the attic AT, temperatures detected by the common space temperature sensors 5a to 51, an air temperature of the outdoor area 99, and the first ventilation fan 46. The controller 30 may acquire the temperature distribution in the attic AT from parameters such as weather and an air current in the outdoor area 99, in addition to the temperature distribution in the attic AT, the temperatures detected by the common space temperature sensors 5a to 51, the air temperature of the outdoor area 99, and the first ventilation fan 46. The memory 32 of the controller 30 may store therein data on the associations among the temperature distribution in the attic AT, the temperatures detected by the common space temperature sensors 5a to 51, the air temperature of the outdoor area 99, and the first ventilation fan 46.

### (4) Modifications

### (4-1) Modification 1A

According to the foregoing embodiment, the first ventilation fan 46 is an exhaust fan. Alternatively, the first ventilation fan 46 may be an intake fan. Still alternatively, the first ventilation fan 46 may function as an intake fan and an exhaust fan in a switchable manner.

### (4-2) Modification 1B

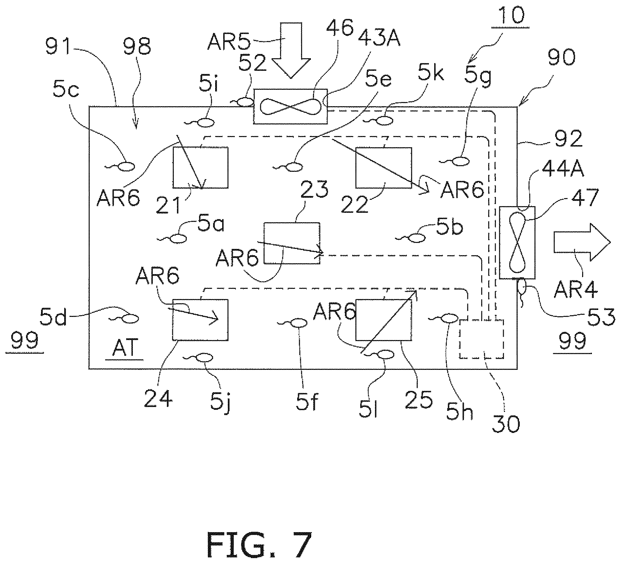

According to the foregoing embodiment, only the first ventilation fan 46 is provided as a ventilation fan. Alternatively, the present invention is applicable to an air conditioning system including a plurality of ventilation fans. As illustrated in FIG. 7, for example, an air conditioning system 10 according to Modification 1B includes a first ventilation fan 46 and a second ventilation fan 47. The second ventilation fan 47 is an exhaust fan that is controlled by a controller 30 and whose number of rotations is changeable. The air conditioning system 10 according to Modification 1B also includes a first temperature sensor 52 and a second temperature sensor 53 each configured to detect an air temperature of an outdoor area 99. The first temperature sensor 52 detects a temperature around a north wall 91, and the second temperature sensor 53 detects a temperature around an east wall 92. In the air conditioning system 10 according to Modification 1B, in a cooling operation, the controller 30 compares a temperature detected by the first temperature sensor 52 with a temperature detected by the second temperature sensor 53 to allow intake of outside air through an exhaust fan on a wall whose air temperature is lower. In a heating operation, the controller 30 compares a temperature detected by the first temperature sensor 52 with a temperature detected by the second temperature sensor 53 to allow intake of outside air through an exhaust fan on a wall whose air temperature is higher. As illustrated in FIG. 7, the controller 30 stops the first ventilation fan 46 and drives the second ventilation fan 47, thereby allowing intake of outside air from the north wall 91. When the second ventilation fan 47 is driven, an air current directed from an attic AT to an outdoor area 99 through a ventilation port 44A is produced as indicated by an arrow AR4 in FIG. 7. The air current indicated by the arrow AR4 forms a negative pressure in the attic AT to produce an air current directed from the outdoor area 99 to the attic AT through a ventilation port 43A (i.e., an air current indicated by an arrow AR5). Consequently, an air current directed from the ventilation port 43A to the ventilation port 44A (i.e., an air current indicated by an arrow AR6) is produced in the attic AT. The controller 30 allows intake of outside air at more appropriate air temperature through one of the ventilation ports 43A and 44A, thereby further improving heat exchange efficiency of the air conditioning system 10. As described with reference to FIG. 2, the first ventilation fan 46 is driven for producing the air current directed from the ventilation port 44A toward the ventilation port 43A. At this time, the second ventilation fan 47 is stopped.

### (4-3) Modification 1C

According to the foregoing embodiment, the common space temperature sensors 5a to 5l disposed in the attic AT are used. Alternatively, the temperature sensors 71 of the air conditioners 21 to 25 may be used instead of the common space temperature sensors 5a to 51. In addition, temperatures detected by the common space temperature sensors 5a to 5l and the temperatures detected by the temperature sensors 71 may be used as the temperature information items at the plural positions in the common space.

### (4-4) Modification 1D

According to the foregoing embodiment, the air conditioners 21 to 25 are equal in set temperature to one another. Alternatively, the air conditioning system 10 may be configured to control the air conditioners 21 to 25, based on requests to the respective air conditioners 21 to 25 for temperature control in the room RM as the air-conditioning target space, and the temperature information items at the plural positions in the attic AT as the common space. For example, the air conditioners 21 to 25 may be set at different temperatures. In the case of the different set temperatures, the adjustment for the air conditioning capacities may be changed in accordance with a processing load. Under the same situation of the attic AT, the degree of decrease in air conditioning capacity of the air conditioner 24 at the set temperature of 28°C is adjusted to be smaller than the degree of decrease in air conditioning capacity of the air conditioner 24 at the set temperature of 30°C in the cooling operation. In the case of the set temperature of 28°C, the heat exchange efficiency is apt to decrease, but the degree of comfort in the room RM is apt to increase.

### (4-5) Modification 1E

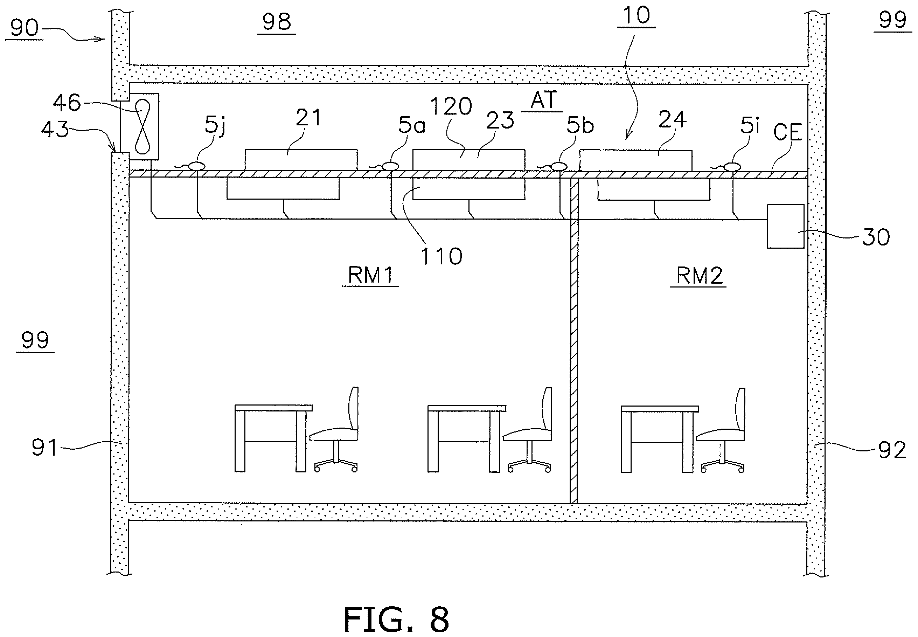

According to the foregoing embodiment, the air-conditioning target space corresponds to one room RM. However, the air-conditioning target space is not limited to one independent space, but may be a plurality of independent spaces. FIG. 8 illustrates a first room RM1 and a second room RM2 as air-conditioning target spaces. Air conditioners 21 to 23 are configured to implement air conditioning in the first room RM1, and air conditioners 24 and 25 are configured to implement air conditioning in the second room RM2. In a case where an air-conditioning target space is divided into a plurality of independent spaces, the air conditioners are divided into a plurality of groups. One or more air conditioners in each group implement air conditioning of the corresponding independent space. In an air conditioning system 10 illustrated in FIG. 8, the air conditioners 21 to 23 belong to a first group, and the air conditioners 24 and 25 belong to a second group. Distribution control is performed for each group. For example, the air conditioners in the first group and the air conditioners in the second group are set to have air conditioning capacities of "0.6" and "0.4", respectively. A controller 30 determines distribution of the air conditioning capacities of the air conditioners 21 to 23 in the first group, based on, for example, temperature distribution such that a sum of the air conditioning capacities of the air conditioners 21 to 23 in the first group becomes equal to "0.6". For example, the air conditioning capacities of the air conditioners 21 to 23 are respectively set at "0.1", "0.3", and "0.2" such that the air conditioning capacity of the air conditioner 22 making an air temperature of an attic AT most appropriate becomes largest. In addition, the air conditioning capacities of the air conditioners 24 and 25 are respectively set at "0.1" and "0.3" such that the air conditioning capacity of the air conditioner 24 in a place where stagnation of an air current is apt to occur in the attic AT becomes smaller than the air conditioning capacity of the air conditioner 25.

### (4-6) Modification 1F

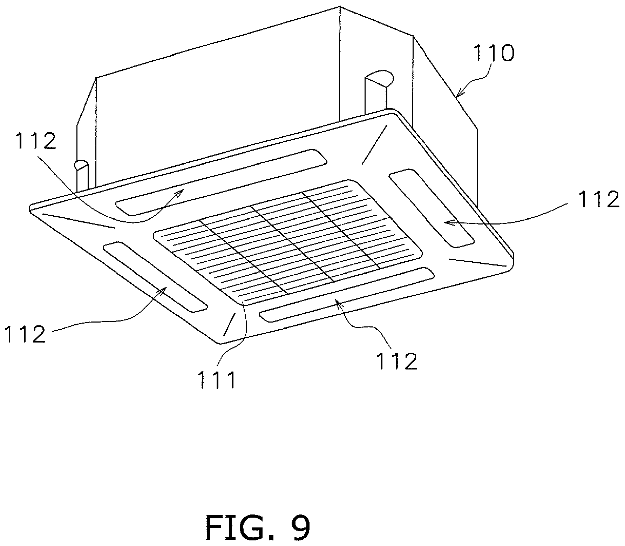

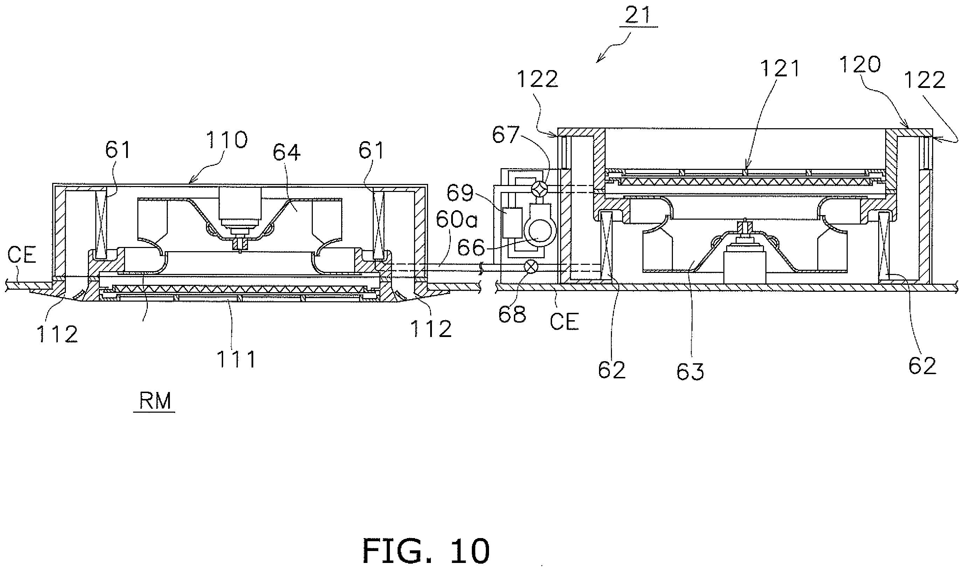

According to the foregoing embodiment as well as Modifications 1A to 1E, each of the air conditioners 21 to 25 is of a unitary type. As illustrated in FIGS. 9 and 10, an air conditioner may be of a separate type. The following description exemplifies an air conditioner 21. The separate air conditioner 21 is different from the unitary air conditioner 21 in the following points. The unitary air conditioner 21 includes one casing 65 whose internal space is divided by the partition plate 65a, whereas the separate air conditioner 21 includes a first casing 110 and a second casing 120 that are separate from each other. The first casing 110 that is exposed to a room RM has a room-side intake port 111 through which air in the room RM is taken in, and a room-side blow-out port 112 through which air is blown into the room RM. The second casing 120 that is exposed to an attic AT has a common space-side intake port 121 through which air in the attic AT is taken in, and a common space-side blow-out port 122 through which air is blown into the attic AT. As illustrated in FIG. 10, the air conditioner 21 may include a common space-side fan 63 and an air-conditioning target space-side fan 64 each of which is a centrifugal fan. The air conditioner 21 may also include an air-conditioning target space-side heat exchanger 61 formed in a quadrangular ring shape so as to surround the common space-side fan 63, and a common space-side heat exchanger 62 formed in a quadrangular ring shape so as to surround the air-conditioning target space-side fan 64. For example, the air-conditioning target space-side heat exchanger 61 is formed in a quadrangular ring shape with four sides, and is disposed in correspondence with four room-side blow-out ports 112 illustrated in FIG. 9.

In the example of FIG. 10, one air conditioner 21 enables heat transfer between one common space-side heat exchanger 62 and one air-conditioning target space-side heat exchanger 61. Alternatively, one air conditioner 21 may be configured to carry out heat transfer between one common space-side heat exchanger 62 and a plurality of air-conditioning target space-side heat exchangers 61 in such a manner that the air conditioner 21 includes a plurality of first casings 110 and a plurality of components housed in each first casing 110. In this case, the first casings 110 are used for air conditioning in a single air conditioned space.

### (4-7) Modification 1G

According to the foregoing embodiment and Modification 1C, the temperature information items at the plural positions in the common space are temperatures detected by the common space temperature sensors 5a to 5l and/or temperatures detected by the temperature sensors 71 of the air conditioners 21 to 25. However, all the temperature information items at the plural positions in the common space are not necessarily obtained by measurement. For example, the temperature distribution in the attic AT is predictable by simulation, based on necessary data such as an air temperature of the outdoor area 99, and requests to the air conditioners 21 to 25. The plurality of air conditioners may be controlled based on the results of prediction on the temperature distribution.

### (4-8) Modification 1H

According to the foregoing embodiment, the common space-side intake port 65f is formed in an upper face of the casing 65; however, a position of the common space-side intake port 65f is not limited to the upper face of the casing 65. For example, the common space-side intake port 65f may be formed in the side face of the casing 65.

### (5) Features

### (5-1)

In the air conditioning system 10, the common space-side heat exchangers 62 of the air conditioners 21 to 25 are disposed in the attic AT as the common space. The controller 30 controls the air conditioners 21 to 25, based on the temperature information items at the plural positions in the attic AT. This configuration thus enables control of more efficient operations of the air conditioners 21 to 25 at each of the positions in accordance with the temperature information items at each of the positions. The air conditioning system 10 consequently reduces its entire energy consumption. Examples of the temperature information items at the plural positions in the common space may include the temperatures detected by the common space temperature sensors 5a to 5l in the foregoing embodiment, the temperatures detected by the temperature sensors 71 of the air conditioners 21 to 25 in Modification 1C, and the results of simulation on the temperature distribution in the attic AT without the need of measurement on the air temperature of the attic AT in Modification 1G. The common space is not limited to the attic AT. For example, the common space may be an open hall connecting between the attics of upper and lower floors in a building, or a clearance between two walls of adjoining rooms.

### (5-2)

As described with reference to FIG. 6, the air conditioning system 10 controls the capacities of the air conditioners 21 to 25 respectively, based on the temperature information items at the plural positions in the attic AT. This configuration thus causes the air conditioners 21 to 25 to exert the capacities appropriate to the temperatures at the respective positions. In the cooling operation, the air conditioning system 10 decreases the cooling capacity of an air conditioner disposed at a position where air temperature is high in the attic AT, and increases the cooling capacity of an air conditioner disposed at a position where air temperature is low in the attic AT. This configuration consequently subjects a large volume of air in the attic AT to efficient heat exchange by the air conditioner disposed at the position where the air temperature is low in the attic AT. This configuration thus enables an increase in heat exchange efficiency in the entire system by increasing the burden on the air conditioner with good heat exchange efficiency. In the heating operation, the air conditioning system 10 decreases the heating capacity of an air conditioner disposed at a position where air temperature is low in the attic AT, and increases the heating capacity of an air conditioner disposed at a position where air temperature is high in the attic AT. This configuration consequently subjects a large volume of air in the attic AT to efficient heat exchange by the air conditioner disposed at the position where the air temperature is high in the attic AT. This configuration thus enables an increase in heat exchange efficiency in the entire system by increasing the burden on the air conditioner with good heat exchange efficiency.

### (5-3)

The air conditioning system 10 determines the distribution of the air conditioning capacities of the air conditioners 21 to 25, based on the temperature information items at the plural positions in the attic AT. The air conditioning system 10 thus divides the air conditioners 21 to 25 into air conditioners with good heat exchange efficiency and air conditioners with poor heat exchange efficiency, based on the temperature information items in the attic AT. The air conditioning system 10 then appropriately increases a ratio of the air conditioning capacities of the air conditioners with good heat exchange efficiency in the entire system. The air conditioning system 10 also appropriately decreases a ratio of the air conditioning capacities of the air conditioners with poor heat exchange efficiency in the entire system. This configuration thus enables an increase in heat exchange efficiency in the entire system by the appropriate capacity distribution.

### (5-4)

The air conditioning system 10 controls the air conditioners 21 to 25, based on not only the temperature information items at the plural positions, but also the requests for temperature control in the room RM as the air-conditioning target space, such as a processing load to be obtained from, for example, a difference between a set temperature and a temperature of air to be sucked. This configuration therefore improves the heat exchange efficiency in the entire system while reducing inappropriate decrease in air conditioning capacity of each air conditioner in the room RM. In the cooling operation, for example, the air conditioning system 10 reduces excessive decrease in air conditioning capacity of an air conditioner whose set temperature is low and into which high-temperature air is sucked. The air conditioning system 10 thus reduces a situation in which a user near the air conditioner feels hot and uncomfortable. In contrast, the air conditioning system 10 reduces excessive increase in air conditioning capacity of an air conditioner whose set temperature is high and into which low-temperature air is sucked. The air conditioning system 10 thus reduces a situation in which a user near the air conditioner feels too cold and uncomfortable. This results in reduction of decrease in capacity to adjust an air temperature of the air-conditioning target space.

### (5-5)

The air conditioning system 10 controls the air conditioners 21 to 25, based on the temperature distribution in the attic AT. This configuration enables control appropriate to the temperature distribution in the attic AT so as to efficiently operate the air conditioners 21 to 25. This results in improvement in reduction of energy consumption in such a manner that the air conditioning system 10 operates in accordance with the temperature distribution in the attic AT.

### (5-6)

The air conditioning system 10 controls the air conditioners 21 to 25, based on the real-time temperature information items obtained by measuring the temperatures at the plural positions in the attic AT in real time, using the common space temperature sensors 5a to 5l or the temperature sensors 71 of the air conditioners 21 to 25. This configuration thus reduces energy loss to be caused when the operations of the air conditioners 21 to 25 deviate from an appropriate operating state because of a difference between an actual temperature and a temperature based on each temperature information item. This results in reduction of energy consumption in the entire air conditioning system 10 by reducing energy loss due to a temporal change in air temperature of the attic AT.

### REFERENCE SIGNS LIST

10: air conditioning system
21 to 25: air conditioner
30: controller
46: first ventilation fan
47: second ventilation fan
52: first temperature sensor
53: second temperature sensor
5a to 51: common space temperature sensor
61: air-conditioning target space-side heat exchanger
62: common space-side heat exchanger
63: common space-side fan
64: air-conditioning target space-side fan

### CITATION LIST

### PATENT LITERATURE

Patent Literature 1: JP S48-2756 A

## Claims

1. An air conditioning system (10) for implementing air conditioning in an air-conditioning target space of an indoor area by carrying out heat exchange with air in a common space that is disposed on a periphery of the air-conditioning target space in the indoor area and is not subjected to air conditioning,
the air conditioning system comprising:
a plurality of air conditioners (21 to 25) each including
an air-conditioning target space-side heat exchanger (61) configured to carry out heat exchange with air in the air-conditioning target space;
a common space-side heat exchanger (62) configured to carry out heat transfer to and from the air-conditioning target space-side heat exchanger; and
a common space-side fan (63) configured to feed taken in air from the common space to the common space-side heat exchanger and to blow the air into the common space,
wherein
the common space-side heat exchangers are disposed in the common space, and
the air-conditioning target space-side heat exchangers implement air conditioning in the air-conditioning target space,
**characterized in that**
the air conditioning system is configured to control the air conditioners, based on temperature information items at plural positions in the common space.

2. The air conditioning system according to claim 1, wherein
the air conditioning system is configured to control capacities of the air conditioners, based on the temperature information items at the plural positions in the common space.

3. The air conditioning system according to claim 1 or 2, wherein
the air conditioning system is configured to determine distribution of air conditioning capacities of the air conditioners, based on the temperature information items at the plural positions in the common space.

4. The air conditioning system according to any one of claims 1 to 3, wherein
the air conditioning system is configured to control the air conditioners, based on requests to the respective air conditioners for temperature control in the air-conditioning target space, and the temperature information items at the plural positions in the common space.

5. The air conditioning system according to any one of claims 1 to 4, wherein
the temperature information items at the plural positions in the common space indicate temperature distribution in the common space.

6. The air conditioning system according to any one of claims 1 to 5, wherein
the temperature information items at the plural positions in the common space are real-time temperature information items to be obtained by measuring temperatures at the plural positions in the common space in real time.

## Patentansprüche

1. Klimatisierungssystem (10) zum Durchführen einer Klimatisierung in einem Klimatisierungs-Zielraum eines Innenbereichs durch Ausführen eines Wärmetauschs mit Luft in einem gemeinsamen Raum, der in einem Umfeld des Klimatisierungs-Zielraums im Innenbereich angeordnet ist und keiner Klimatisierung unterliegt,
wobei das Klimatisierungssystem aufweist:
mehrere Klimageräte (21 bis 25), die jeweils aufweisen:
einen Wärmetauscher (61) auf der Klimatisierungs-Zielraumseite, der konfiguriert ist, einen Wärmetausch mit Luft im Klimatisierungs-Zielraum auszuführen;
einen Wärmetauscher (62) auf der Seite des gemeinsamen Raums, der konfiguriert ist, eine Wärmeübertragung zu und vom Wärmetauscher auf der Klimatisierungs-Zielraumseite auszuführen; und
einen Ventilator (63) auf der Seite des gemeinsamen Raums, der konfiguriert ist, aus dem gemeinsamen Raum aufgenommene Luft dem Wärmetauscher auf der Seite des gemeinsamen Raums zuzuführen und die Luft in den gemeinsamen Raum zu blasen, wobei
die Wärmetauscher auf der Seite des gemeinsamen Raums im gemeinsamen Raum angeordnet sind, und
die Wärmetauscher auf der Klimatisierungs-Zielraumseite die Klimatisierung im Klimatisierungs-Zielraum durchführen, **dadurch gekennzeichnet, dass**
das Klimatisierungssystem konfiguriert ist, die Klimageräte beruhend auf Temperaturinformationen an mehreren Positionen im gemeinsamen Raum zu steuern.

2. Klimatisierungssystem nach Anspruch 1, wobei
das Klimatisierungssystem konfiguriert ist, Kapazitäten der Klimageräte beruhend auf den Temperaturinformationen an den mehreren Positionen im gemeinsamen Raum zu steuern.

3. Klimatisierungssystem nach Anspruch 1 oder 2, wobei
das Klimatisierungssystem konfiguriert ist, eine Verteilung der Klimatisierungskapazitäten der Klimageräte beruhend auf den Temperaturinformationen an den mehreren Positionen im gemeinsamen Raum zu bestimmen.

4. Klimatisierungssystem nach einem der Ansprüche 1 bis 3, wobei
das Klimatisierungssystem konfiguriert ist, die Klimageräte beruhend auf Anforderungen an die jeweiligen Klimageräte nach einer Temperaturregelung im Klimatisierungs-Zielraum und den Temperaturinformationen an den mehreren Positionen im gemeinsamen Raum zu steuern.

5. Klimatisierungssystem nach einem der Ansprüche 1 bis 4, wobei
die Temperaturinformationen an den mehreren Positionen im gemeinsamen Raum eine Temperaturverteilung im gemeinsamen Raum anzeigen.

6. Klimatisierungssystem nach einem der Ansprüche 1 bis 5, wobei
die Temperaturinformationen an den mehreren Positionen im gemeinsamen Raum Echtzeit-Temperaturinformationen sind, die durch Messen von Temperaturen an den mehreren Positionen im gemeinsamen Raum in Echtzeit werden sollen.

## Revendications

1. Système de climatisation (10) pour le conditionnement d'air dans un espace cible climatisé d'une zone intérieure par exécution d'un échange de chaleur avec de l'air dans un espace commun situé à la périphérie de l'espace cible climatisé dans la zone intérieure et non soumis à une climatisation,
ledit système de climatisation comprenant :
une pluralité de climatiseurs (21 to 25) présentant chacun un échangeur de chaleur côté espace cible climatisé (61) prévu pour effectuer un échange de chaleur avec de l'air dans l'espace cible climatisé ;
un échangeur de chaleur côté espace commun (62) prévu pour effectuer un transfert de chaleur vers/depuis l'échangeur de chaleur côté espace cible climatisé ; et
un ventilateur côté espace commun(63) prévu pour refouler vers l'échangeur de chaleur côté espace commun de l'air aspiré dans l'espace commun et pour souffler de l'air dans l'espace commun,
où
les échangeurs de chaleur côté espace commun sont disposés dans l'espace commun, et
les échangeurs de chaleur côté espace cible climatisé conditionnent l'air dans l'espace cible climatisé,
**caractérisé en ce que**
ledit système de climatisation est prévu pour commander les climatiseurs sur la base d'éléments d'information de température à plusieurs emplacements dans l'espace commun.

2. Système de climatisation selon la revendication 1, où
ledit système de climatisation est prévu pour commander les capacités des climatiseurs sur la base des éléments d'information de température pour les plusieurs emplacements dans l'espace commun.

3. Système de climatisation selon la revendication 1 ou la revendication 2, où
ledit système de climatisation est prévu pour déterminer la distribution des capacités de climatisation des climatiseurs sur la base des éléments d'information de température pour les plusieurs emplacements dans l'espace commun.

4. Système de climatisation selon l'une des revendications 1 à 3, où
ledit système de climatisation est prévu pour commander les climatiseurs sur la base de demandes aux climatiseurs respectifs pour une commande de température dans l'espace cible climatisé, et des éléments d'information de température pour les plusieurs emplacements dans l'espace commun.

5. Système de climatisation selon l'une des revendications 1 à 4, où
les éléments d'information de température pour les plusieurs emplacements dans l'espace commun indiquent une distribution de température dans l'espace commun.

6. Système de climatisation selon l'une des revendications 1 à 5, où
les éléments d'information de température pour les plusieurs emplacements dans l'espace commun sont des éléments d'information de température en temps réel à obtenir par mesure de températures en temps réel pour les plusieurs emplacements dans l'espace commun.
